# EUROPEAN PATENT APPLICATION

(11) **EP 4 295 702 A1**
(43) Date of publication of application: **27.12.2023**
(21) Application number: 21926400.9
(22) Date of filing: 18.02.2021
(51) Int. Cl.: A23P 10/00, A23P 30/10, A23P 30/20, A23L 35/00

(54) **METHOD AND DEVICE FOR PRODUCING PRODUCTS FROM WARM DOUGH**

(71) Applicant: Coprinal GF, S.L., 50720 La Cartuja Baja (Zaragoza) (ES)
(72) Inventor: LÓPEZ FUERIS, Juan Ignacio, 50720 La Cartuja Baja (Zaragoza) (ES); LÓPEZ FUERIS, Jorge Luis, 50720 La Cartuja Baja (Zaragoza) (ES); LÓPEZ FUERIS, Eduardo José, 50720 La Cartuja Baja (Zaragoza) (ES)
(74) Representative: Ungria López, Javier
(86) International application number: PCT/ES2021/070118
(87) International publication number: WO 2022/175569

(57) **Abstract**

Disclosed is a method for producing products from warm dough, which comprises: producing (1) a dough by means of cooking; dispensing (2) the dough into a first container (7) up to a predetermined level; inserting (3), while the dough is warm, a first forming cutting mould (8) provided with a plurality of tubular cells (9) in the shape of the product to be obtained, for example, a croquette, to fill each of the cells with the dough; and rapidly cooling (4), thereby forming the croquettes, which are pushed out by means of a first ejector mould (16) to obtain a plurality of croquettes simultaneously. Any leftover dough is dispensed (2) warm into a second container (7') provided with a movable separator (18), which moves after dispensing, until the dough reaches the predetermined level, and the previous steps are repeated.

## Description

### Object of the invention

The present invention relates to a method and a device for producing products from warm dough, the purpose of which is to improve existing methods and devices for making products that are made from warm dough, to highly improve the manufacturing of the same.

The invention can be used for producing any type of product obtained from warm dough, such as croquettes or fish dough.

### Background of the invention

All current processes for producing croquettes, from the most traditional to the most automated, are based on the paradigm of dispensing, cutting and forming the croquette while cool, meaning transforming the dough or bechamel into a croquette once it is cool and has settled, to later proceed to the pasting, flouring, breading or application of other coatings that may be required.

In short, all production of croquettes must pass through the following phases, (in this point industrial production is described, but it can be applied to any type of production).
1. Producing the dough, béchamel or sauce that will be the basis for the subsequent production of the croquettes. The dough is made with the help of a cream cooker, hot mixer or similar, of the size that adjusts to the desired production (they range from a capacity of a few litres up to hundreds of litres). The ingredients that will make up the resulting dough are mixed and cooked in the cream cooker. At this point, 3 important factors must be considered:
   a) The texture of the dough, which will mainly depend on the temperatures and cooking time, relationship between the amounts of fat (oil, butter, margarine...), flour (wheat, corn...) and liquids (milk, broth, water...) and whether to include (and the quantity of) thickening agents. The dough texture is a key factor, since it will have a decisive influence on the difficulty of the subsequent production and quality thereof, as well as on the rest of the organoleptic features of the final product. There must be a balance between the ideal texture for the croquette and the ideal texture for the correct production thereof.
   b) Organoleptic features, which define the quality of the product itself and which, in turn, depend on the quality of the ingredients, how they are cooked, the quantity and quality of the materials, what the main ingredient that will define the flavor and type of croquette is (ham, chicken, prawns and hake, mushrooms, cod, etc.) and whether or not to include (and the quantity thereof) flavoring additives.
   c) Microbiological index, which ultimately indicates whether it is suitable for consumption, regardless of the quality of the product. The product can be a product with a very low quality and suitable for consumption, or have a very high quality and be unsuitable for consumption (there are foods that, even with a good appearance and smell, may contain pathogenic bacteria that make them unsuitable for consumption). However, contaminated foods generally have poor organoleptic features in some, several or all of their aspects (colour, smell, taste...).

To avoid contamination of the dough, it is necessary to ensure that the ingredients are in perfect condition, that the temperatures and/or cooking times are as high as possible within the requirements of the product being cooked, hygienic measures are carried out by operators and for all the auxiliary material necessary for the process, including, of course, the facilities themselves (environment included).

Preservatives that do not eliminate product contamination but do slow the growth thereof can be used.

2. Once the dough has finished cooking, it is then dispensed of the cream cooker, which is generally done manually using a lever incorporated in the cream cooker, but can also be done automatically. The warm dough, normally above 70 °C, is placed in containers and rapidly cooled. Said cooling must be in such a way that the temperature of the dough in the middle thereof falls below 10 °C in less than 2 hours. This operation is necessary to avoid excessively rapid bacterial growth in the dough, since bacterial growth is most effective between 10 °C and 40 °C. Therefore, the less time the dough spends in this temperature range, the less bacterial growth will occur, which directly affects the quality and durability of the product.

That is why the dough is usually distributed among several containers so that the cooling can be carried out faster (the smaller the volume of dough, the faster it cools).

This distribution using several containers does not have to be exact, although the volumes of dough must be similar so that they all cool as homogeneously as possible. Rapid cooling can impair the texture of the dough, because excessive or sudden cold can cause the structure of the dough to suffer and make it crack or more brittle. If cracking occurs, it becomes extremely difficult to make the croquettes. That is why, for this step, many producers use thickening agents or similar to avoid this problem.

Rapid cooling is normally done in blast chillers provided with guide rails to place the trays by hand, leaving them separated from one another (so that the cooling is faster and the dough can efficiently evaporate the heat), or in larger blast chillers, in which the trays are placed separately on a food rack trolley, which is fully inserted into the blast chiller. The use of rapid cooling tunnels is also known.

This rapid cooling process is also carried out, although frequently, by immersing the dough, previously sealed in plastic bags, in a water tank at a controlled temperature.

3. Once the dough has cooled, it is left to sit and stored in a chamber at a controlled temperature to slow bacterial growth as much as possible. It is necessary to ensure that this temperature is as low as possible without affecting the texture of the dough (if it is too cold it can make it brittle). This chamber must be thoroughly cleaned and maintained, in order to avoid a possible contamination of the product.

The resting stage of the dough usually lasts for one day and is essential for the dough to remain thick and not break during the rest of the cooking process, although this stage can be skipped if thickening agents are used, yet these components affect the quality of the product. The invention does not require a resting step and does not use thickening agents.

4. At this point, the croquette itself is made. There is a wide variety of machinery to facilitate this task, but all of them are based on the same steps:
a) The dough (once removed from the containers in which it has been resting), is tightly introduced into a filling machine. There are pneumatic and hydraulic filling machines, in which the dough is introduced and pressed by hand. It must be considered that the filling machine must be well sterilised and the operators must avoid any risk of contamination of the dough during the handling thereof. Even so, the pressing of the dough, and the time this takes, is conducive to bacterial proliferation. There are also vacuum filling machines, which are much more expensive, complex and bulky, which automatically perform this process. Even in this case, the pressing inside the filling machine can lead to contamination of the dough.

On the outlet of the machine, a nozzle is placed, through which the dough will come out at the desired width.
b) The outlet nozzle of the filling machine must be assembled to a croquette-forming cutting machine. The dispensing function is carried out by means of the controlled output of the pressed dough in the filling machine through the nozzle which, along with cuts by the cutting machine at a specific frequency (carried out either by time or length sensors), provide the length of the piece which, along with the width of the nozzle, provides the final shape of the croquette. The outlet nozzles for the dough, and the tubes through which it reaches the cutter, are areas where remnants of the product remain, which can also be sources of contamination.

Pneumatic and hydraulic filling machines are usually assembled to a cutting machine that only accept one outlet nozzle, or at most two. Vacuum filling machines are usually fitted to forming cutters that accept four, six or eight outlet nozzles at the same time, thus multiplying the speed in the production of croquettes. The cutting and shaping of the croquette is also a time when bacteria can grow.
c) Once the croquette has been formed, it is provided with the desired coating (egg, flour, breadcrumbs, etc.).

The aforementioned methods and devices of the state of the art have the following drawbacks:
- The texture of the dough must be adapted to the specific features of each of the croquette filling, dispensing and cutting machines currently on the market; not just any texture can be used.
- For a proper production of the croquettes, the dough needs to rest after the rapid cooling thereof. The resting time can vary, but is usually 24 hours, which considerably lengthens the process. It should be noted that this stage can be skipped, in which case the use of thickening agents is required, which have the drawback in that they affect the quality of the product.
- The impossibility of continuously carrying out the process, due to the need for the dough to rest, which favours the growth of bacteria and other pathogens (listeria, salmonella...) during this time.
- An intermediate chamber at a controlled temperature is used for the dough to rest, which increases the chances of cross contamination (bacteria, fungi and other pathogens present in the environment or on surfaces). In addition, it is necessary to have space to place said chamber, which, furthermore, needs maintenance, consumes electricity, requires exhaustive cleaning, entails HACCP (Hazard Analysis and Critical Control Points), etc.
- An intensive use of filling machines of the pneumatic, hydraulic and/or vacuum type, and of forming/dispensing/cutting machines, is required.
- The dough is handled and/or treated with great frequency. This increases the degradation of the product, shortening the useful life and original quality thereof. It also favours bacterial growth (mesophiles and others) and possible contamination due to contact by operators (pathogens such as E. coli, Staphylococcus aureus, etc.)
- Space is needed for the machines, which must also be able to adapt to the facilities and other protocols.
- For the operation of the machines, it is essential to have an electrical installation (even three-phase), which entails electricity costs and energy consumption.
- A significant initial investment is required for the acquisition and implementation of the machines.
- There is uncertainty regarding possible amortisation, in the right choice of the type of machines that best adapt to the different processes carried out (or that can be carried out) and in the current (and expected) production volumes.
- Greater probability of mechanical failures in these machines, which implies drawbacks and costs to take into account, given production stoppage and repair costs for technicians.
- The need for maintenance and replacement of parts and materials, due to wear, which require renewal at the end of the useful life thereof.
- The obligation to know the operation and risks of the machines.
- Machinery with a certain degree of danger for the operators.
- The machines are difficult to clean. They have areas that are difficult to access, other areas that cannot get wet, moving parts with recesses that hinder cleaning, etc. In general, cleaning is a very tedious task that consumes a lot of time, given the importance thereof, as it is a common area of contamination.
- Being processes that are done cold, the dispensing, cutting and forming of the croquette must always be linear. This means that for each outlet of the machine, only one croquette can come out at a time (one after the other). Most current machines have a single outlet, although the largest and most automated machines can have up to eight outlets, so in either case croquette production is not optimised with respect to the invention.
- The final product obtained is often far from the desired standard result. It can be altered by any small modification in the production, rapid cooling and/or resting of the product, as well as by any alteration in the operation of the machinery.
- Product remnants and loss occur during the process.
- The machines generate noise, noise pollution and require the use of specific protective helmets by operators for each of the machines used.
- Time is required to assemble and disassemble the machines, for the correct cleaning thereof, with the risk of the presence of bacteria.
- All the processes are industrial, so they are unsuitable for small productions or at home.

### Description of the invention

In order to achieve the aims of the invention and solve the previously mentioned drawbacks, the invention provides a method for producing products from warm dough, which begins with a phase of producing a dough, which is dispensed warm into a first container up to a predetermined level, corresponding to a height of the product to be obtained. The invention presents the novelty because a first forming cutting mould provided with a plurality of tubular cells in the shape of a model of the product to be obtained is then inserted into the first container with the warm dough, so that each of the tubular cells is simultaneously filled with the dough. A rapid cooling is subsequently applied to the set of the previous phase, and the first forming cutting mould is extracted from the first container, leaving the dough placed inside the tubular cells, establishing the shape of the product to be obtained. Extensions of a first ejector mould are then tightly inserted into the cells of the first forming cutting mould such that each of the products formed in the cells are ejected.

Therefore, the process described performs the dispensing and cutting warm, and the forming of the product while the dough is cooling in a way that avoids the requirement of a resting phase, as is conventionally the case, thereby considerably simplifying both the method and the croquette-making device.

The phase of filling the first container to a predetermined level can be carried out by using a mark or stop established in the first container, by weighing the first container with the dough or by computer-controlled automatic filling.

The entire amount of dough produced is divided into first containers, and all of them are processed in the manner described. In the case where an amount of dough is leftover without a volume sufficient enough to fill a first container up to the predetermined level, the method is envisaged to comprise a phase of dispensing said leftover dough warm into a second container, which is equipped with a movable separator, configured to move until the leftover dough of the second container reaches the same predetermined level of the first container. The rest of the process is repeated, but with the difference that, in this case, in the second container with the warm dough, a second forming cutting mould is inserted, provided with a plurality of tubular cells, equivalent to the first forming cutting mould, but adapted to house the movable separator in the position in which the dough reaches the predetermined level, for which, as described below, it comprises a series of slots into which the separator is inserted, and with the difference in that a second ejector mould, adapted to the configuration of the second forming cutting mould must be used to obtain the same product model as with the first container.

In any of the cases, once the product is formed, a pasting-breading phase of the croquettes is carried out.

In addition, the invention relates to a device for producing a product from warm dough, which comprises a first container configured to house a warm dough of the product to be obtained, up to a predetermined level, corresponding to a height of the product to be obtained. It also comprises a first forming cutting mould comprising a plurality of tubular cells in the shape of a model of the product to be obtained, and comprises a first ejector mould provided with a plurality of extensions configured to be introduced tightly into the cells of the first container.

In the preferred embodiment, the plurality of tubular cells of the first forming cutting mould are arranged next to each other, forming rows and columns, although they can have any other distribution.

As indicated in the method, the device envisages the use of a second container, configured to dispense a leftover warm dough of the product that has an insufficient volume to fill the first container up to the predetermined level. In this case, the inside of at least one of the side walls of the second container comprises markings. Moreover, the second container is provided with a movable separator, configured to fit inside the same and to allow the excess warm dough to move to a selected position in which the separator is located in correspondence with one of the marks and the dough reaches the predetermined level, corresponding to the product model to be obtained. In this case, it is necessary to use a second forming cutting mould with a plurality of tubular cells in the shape of the product model to be obtained and aligned forming rows and columns, equivalent to the first forming cutting mould, to be able to insert the same into the warm dough of the second container, but with the particular feature in that between each of said rows or columns of cells, it comprises a slot to allow the separator to be housed in the slot corresponding to the selected position. These slots determine that the separation between the tubular cells is greater than that of the first mould, which is why the use of a second ejector mould that comprises a plurality of extensions is required, adapted to be able to be introduced tightly into the cells of the second forming cutting mould.

In order to make use of all the produced dough, it is envisaged that the external measurements of the first and second forming cutting mould match the internal measurements of the first and second container, respectively.

In addition, to facilitate the handling of the first and second containers, the first and second forming cutting moulds, and the first and second ejector moulds have been provided with handles that protrude laterally.

It has also been envisaged that the device comprises a support for the first and second forming cutting mould, which in the preferred embodiment comprises a frame supported by support legs, such that the first or second forming cutting mould can be inserted in said frame, thereby facilitating the entire operation of the previously described method.

In both the first and the second container a recess has been provided in which the handles of the first and second forming cutting moulds are respectively housed, when inserted, to provide a compact configuration.

It is envisaged that the first and second containers can be stacked, for which they have been provided with conventional-type stacking corners.

In short, the described method and device of the invention provide the following advantages over the state of the art:
- They provide a warm dispensing and cutting process for the products, which allows them to be formed cold, all without the need for the dough to rest, which considerably reduces production time, while at the same time allowing a large number of products to be simultaneously obtained, which exponentially multiplies the volume of production, compared to any of the current machines. They also allow for any type of dough texture to be made. Furthermore, they avoid the use of thickening agents that affect the quality of the product.
- They make it possible to carry out the entire process continuously, as the dough is not required to rest.
- They do not require an intermediate chamber.
- They allow for the handling of the device without the need to use any type of machine.
- No handling and/or treatment of the dough is required.
- No extra space is required.
- No electricity is required.
- They have a much lower acquisition and implementation cost. Furthermore, they ensure amortisation, merely taking into account the savings in energy consumption of the machines themselves, as well as the consumption of the intermediate chamber and the facilities themselves (as it is a much faster process).
- Mechanical failures are impossible, given that no maintenance is required and there is minimal wear, and thus the useful life thereof is indefinite.
- No prior knowledge is required to make use of the method and device.
- The device is risk-free and can be washed in a dishwasher.
- The end result always complies with the standards.
- Product loss and product remnants are minimised to the highest extent.
- No noise is produced.
- No assembly is required.
- They are perfectly adaptable to small productions and/or the home environment. They also improve all aspects to the current methods for producing homemade croquettes.

In short, the invention provides a method and device that makes all existing machines on the market slow and obsolete, including the most modern and powerful ones.

### Description of the figures

To complete the description, and for the purpose of helping to make the features of the invention more readily understandable, this description is accompanied by a set of figures constituting an integral part of the same, which by way of illustration and not limitation represents the following:
Figure 1 shows a schematic representation of the phases that constitute the process of the invention.
Figure 2 shows an exploded perspective view of the different components of the device, according to an embodiment of the invention.
Figure 3 shows an exploded perspective view of the components of the device in an embodiment in the case where there is excess croquette dough.

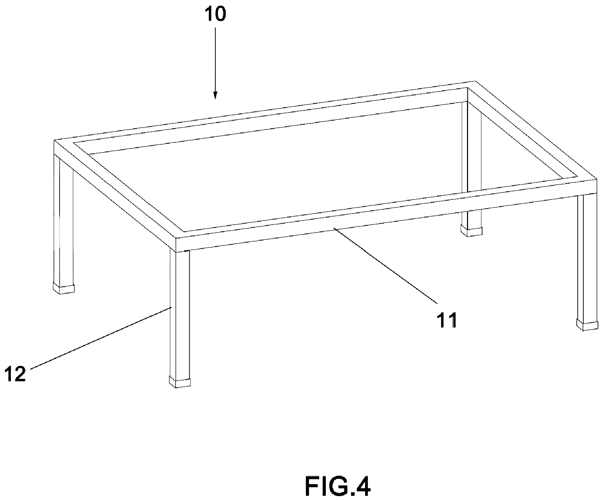

Figure 4 shows a perspective view of the support that is used to hold the components shown in the previous figures in the production of the croquettes.

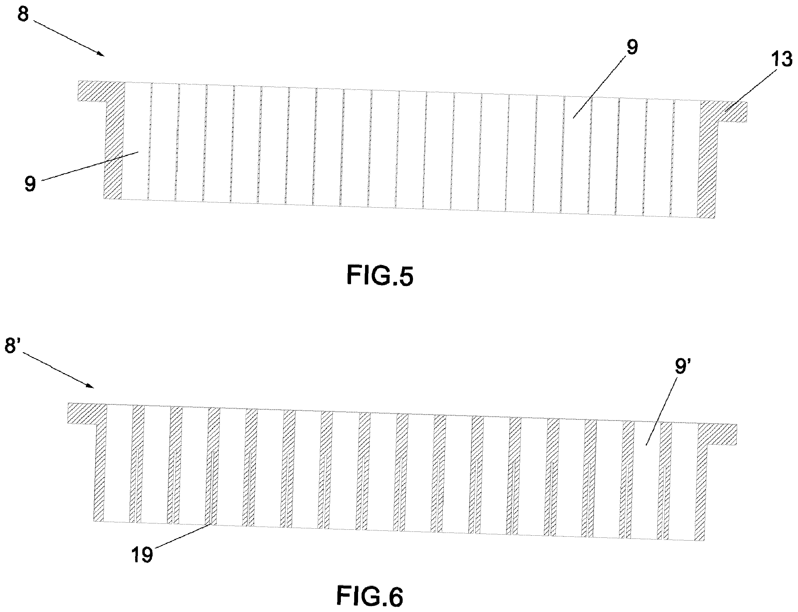

Figure 5 shows a section along the longitudinal axis of the first forming cutting mould represented in Figure 2.
Figure 6 shows a section along the longitudinal axis of the second forming cutting mould represented in Figure 3.

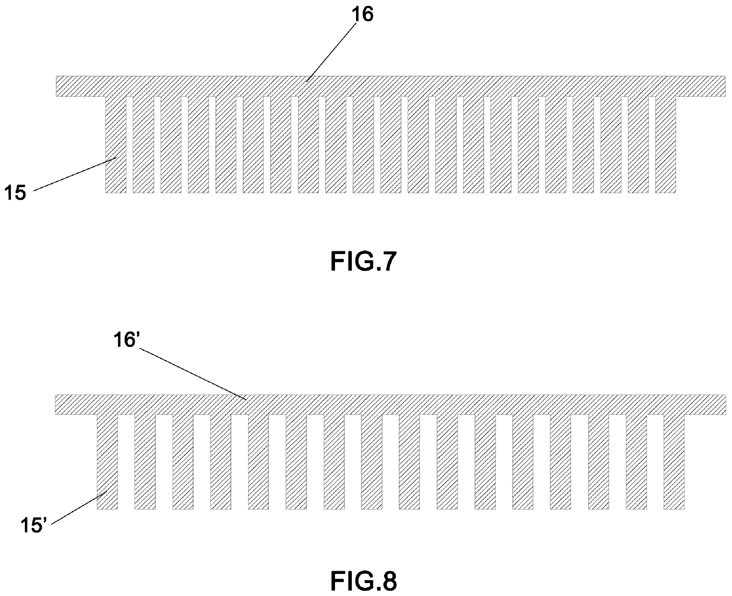

Figure 7 shows a section along the longitudinal axis of the first ejector mould of Figure 2.
Figure 8 shows a section along the longitudinal axis of the second ejector mould of Figure 3

### Preferred embodiment of the invention

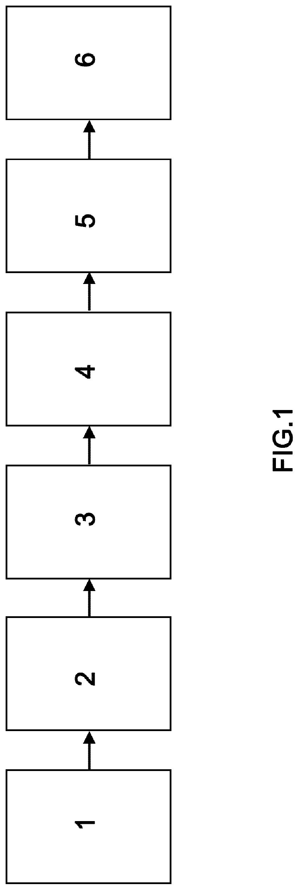

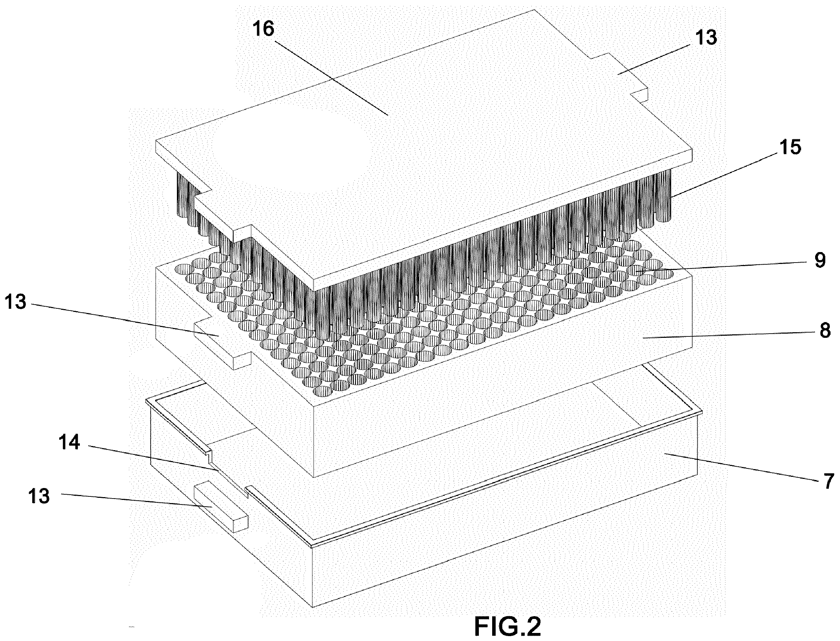

Below, with the help of the previously mentioned figures, the device is described along with the production method of the invention for producing a product from warm dough, which in the example are croquettes, comprising the following phases (Figure 1):
1. Producing a dough by means of cooking (1), under the same conditions as it is currently done, but in this case with the advantage of allowing the dough to be produced with the desired texture, contrary to current methods, since the invention adapts to any type of dough texture. This is possible due to the rest of the phases and devices used, which are described below.
2. The dough from the cream cooker, warm kneading machine or similar, is then dispensed (2) warm into the first containers (7) (Figure 2), until the dough reaches a predetermined level, which in the embodiment corresponds to the height or length of the croquette model to be obtained. The control of the filling up to this level can be done manually or automatically, either by controlling the weight of the dough, placing the first containers on a floor scale, dispensing it until it reaches a level marked in the first containers or by programming when the dispensing is exclusively automatic. To facilitate the handling of the first containers, the same have been provided with handles (13).
3. Once the dough has been dispensed warm into the first containers (7), a first forming cutting mould (8) is inserted (3) into each of them, which comprises a plurality of tubular cells (9), provided in the shape of the croquette model to be obtained, which in the example is a cylindrical shape, and which are arranged in rows and columns, so that they fit tightly inside the first containers (7). In this way, there are no remnants of dough on the sides and all the dough remains inside the cells (9) of the first forming cutting moulds (8), thus achieving the shape of the chosen croquette without product loss, the thickness of which is established by the cross section of the tubular cells (9) and the height by the filling level of the dough in the first containers. To facilitate this phase, the first forming cutting moulds (8) are equipped with a handle (13) that fits into a slot (14) provided in the first containers (7).
4. Then, rapid cooling (4) is applied to the set of the previous phase, made up of the dough, the first containers (7) and the first forming cutting moulds (8), which now form a single operating unit. This cooling is done without the dough having to rest, so that the production process is considerably shortened by means of the invention. Cooling is done conventionally, which according to standards is carried out for 2 hours, keeping the interior of the dough below approximately 10 °C, which may vary depending on existing regulations. It is important to mention that at this point there is no need to worry about the possibility that the rapid and/or excessive cooling of the devices used for this purpose (blast chillers, rapid cooling tunnels...), may crack the dough or make the dough brittle because the shape of the croquette has already been obtained, and thus, in phase (1) any texture can be obtained, as indicated.
5. Once the dough has cooled, the forming cutting mould (8) is extracted (5) from inside the first container (7), by means of the handles (13) thereof, cleaning the inside of said first container, leaving no dough inside the same. Then, the forming cutting mould (8) is placed on a support (10) and on the area where the croquettes are to be placed, for example directly on a paster-breader, to continue with the process. To facilitate this operation, the support (10) comprises a frame (11) with legs (12) as a table, in which the first forming cutting mould is inserted, which is equipped with handles (13), which abut against said frame and facilitate the handling thereof.

Therefore, in the invention the dough is not required to rest, as in the state of the art, so there is no need to use an intermediate chamber for the dough to rest, allowing the whole process to be done linearly, without interruption due to the need for the dough to rest. In addition, these features of the invention prevent any cross contamination or bacterial growth from occurring.

6. Extensions (15) of a first ejector mould (16) are then inserted (6) tightly into the tubular cells (9) of the first forming cutting mould (8), so that the croquettes are pushed downwards, exiting through the lower part of the tubular cells (9).

Given that there is a plurality of tubular cells (9), in this phase, a plurality of croquettes is simultaneously obtained, which, depending on the thickness of the croquette, can be hundreds of croquettes, unlike the state of the art in which this function is carried out in one of the outlet nozzles of the filling machines, normally one or two, and in the cases of greater volume up to 8 simultaneous outlet nozzles. Therefore, the invention produces croquettes extremely quickly, considerably increasing the production thereof, and in such a way that it leaves practically no time for the growth of bacteria.

Consequently, the described method and device avoid direct contact with the dough by the operator, thus preventing any type of product contamination therefrom.

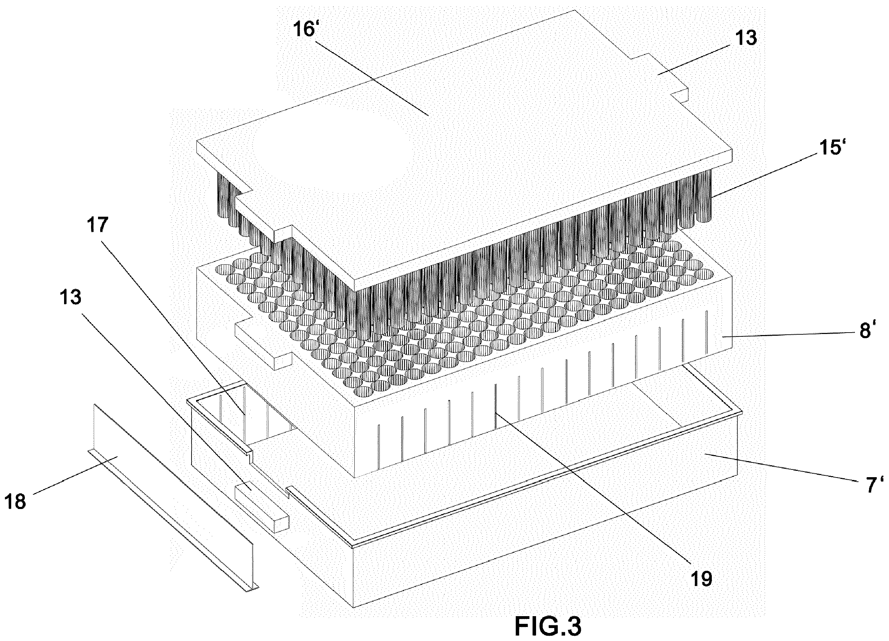

In the case, in which at the end of phase (2), meaning after filling the first containers (7), there is a certain amount of leftover dough that has an insufficient volume to fill a first container (7) up to the predetermined level, the use of a second container (7') (figure 3) is envisaged, into which said leftover dough is dispensed, the configuration of which is the same as that of the first container (7), but with the difference in that it comprises a series of marks (17) arranged facing each other on two of the facing side walls thereof. These marks are intended to indicate different positions at which a separator (18) is to be situated, which fits inside the second container (7'), between said side walls, in such a way that it is configured to allow the leftover dough, dispensed in the second container (7'), to move to a position in which the separator (18) is aligned with one of the marks (17) and the dough reaches the same predetermined level for the first container (7), a position which allows for the insertion in the second container of a second forming cutting mould (8'), to carry out the phase (3), as described below.

Thus, the configuration of the second forming cutting mould (8') is the same as that of the first forming cutting mould (8), but with the difference in that it is provided with slots (19) which, when inserting (3) the second mould (8') into the second container (7'), the same are aligned with the marks (17), such that one of said slots (19) is inserted into the separator (18), thus obtaining the same croquette model as with the first containers (7). Consequently, any remaining final dough that does not fit the size of the first containers is used, regardless of the amount, minimising product loss as much as possible.

Then, while the rapid cooling of the dough in the first containers (7) is taking place, the leftover dough dispensed into the second container (7') is cooled, and the second forming cutting mould is extracted (5) to carry out the phase (6), which in this case is done by means of a second ejector mould (16'), the same as the first mould (16), but adapted to be able to be tightly inserted into the second mould (8').

The described method is very easy and convenient to carry out manually, but it can obviously also be mechanised and/or automated, if so preferred.

Lastly, any of the phases that are conventionally carried out after obtaining the shape of the croquette, such as a pasting-breading phase, and the subsequent packaging for distribution and sale, are carried out.

It has been envisaged that the containers can be stacked, and thus on the bottom face of the bases thereof, and close to the corners, they have been provided with stacking corners, not shown as they are the conventional type, such as corners made up of projections provided with two angular sections parallel to two adjacent sides of the containers.

## Claims

1. A method for producing products from warm dough, which comprises producing a dough by means of cooking (1), which is dispensed (2) into a first container (7) up to a predetermined level, corresponding to a dimension of the product to be obtained, **characterised in that** it further comprises:
- inserting (3) into the first container (7) with the warm dough, a first forming cutting mould (8) provided with a plurality of tubular cells (9) that comprise the shape of a model of the product to be obtained, to simultaneously fill each one of the tubular cells (9) with the dough,
- applying a rapid cooling (4) to the set of the previous phase,
- extracting (5) the first forming cutting mould (8) from the first container (7),
- tightly inserting (6) extensions (15) of a first ejector mould (16) into the tubular cells (9) of the first forming cutting mould (8) to eject each product formed in each of said tubular cells (9) to the outside.

2. The method, according to claim 1, wherein the dispensing phase (2) to fill the first container (7) to a previously established level is selected between filling up to a mark established in the first container (7), filling by weighing the first container (7) with the dough, and a computer-programmed automatic filling.

3. The method, according to claim 1 which, in the case where there is leftover dough with an insufficient volume to fill the first container (7) to the predetermined level, comprises:
- dispensing (2) said warm leftover dough into a second container (7'), provided with a movable separator (18),
- moving the movable separator (18) until the leftover dough reaches the predetermined level,
- inserting (3) into the second container (7'), with the dough warm, a second forming cutting mould (8') configured to insert the movable separator (18) and provided with a plurality of tubular cells (9') with the shape of the product to be obtained, to simultaneously fill each of the tubular cells (9) with the leftover dough,
- applying a rapid cooling (4) of the set of the previous phase,
- extracting (5) the second forming cutting mould from the second container (7'),
- tightly inserting (6) extensions (15') of a second ejector mould (16') into the tubular cells (9') of the second forming cutting mould (8'), to eject each product formed in said tubular cells (9') to the outside, to obtain the same product model as with the first container.

4. The method, according to any one of the preceding claims, comprising a pasting-breading phase of the product ejected and formed in each of the tubular cells (9) and a packaging phase of the same.

5. The method, according to any one of the preceding claims, wherein the product to be obtained is croquettes.

6. A device for producing products from warm dough, **characterised in that** it comprises:
- a first container (7) configured to house a warm dough of a product to be obtained up to a predetermined level, corresponding to a height of the product to be obtained,
- a first forming cutting mould (8) comprising a plurality of tubular cells (9) in the shape of a model of the product to be obtained,
- a first ejector mould (16) comprising a plurality of extensions (15) configured to be introduced tightly into the tubular cells (9) of the first container (7).

7. The device, according to claim 6, wherein the plurality of tubular cells (9) of the first forming cutting mould (8) and the plurality of extensions of the ejector mould (16) are arranged adjacent to each other, forming rows and columns.

8. The device, according to claim 6 or 7, comprising:
- a second container (7'), configured to dispense leftover warm dough of the product to be obtained with an insufficient volume to fill the first container (7) up to the predetermined level, which on the inside of at least one of the side walls thereof comprises marks (17) for signalling positions;
- a separator (18), configured to fit inside the second container (7'), and to move the leftover warm dough up to a selected position in which the separator is located in correspondence with one of the marks and the dough reaches the same predetermined level of the first container (7), corresponding to the product model to be obtained;
- a second forming cutting mould (8'), comprising a plurality of tubular cells (9') in the shape of the product model to be obtained, and aligned forming rows and columns, to be inserted into the warm dough of the second container, wherein between each of said rows or columns of the cells, the same comprises a slot (19) to allow for the insertion of the separator into the slot corresponding to the selected position, and
- a second ejector mould (16') comprising a plurality of extensions (15') configured to be tightly introduced into the tubular cells (9') of the second forming cutting mould (8').

9. The device, according to any one of the claims 6 to 8, wherein the first and second container, the first and second forming cutting mould (8'), and the first and second ejector mould (16') comprise handles (13) that protrude laterally.

10. The device, according to any one of the claims 6 to 9, wherein the external measurements of the first (8) and second forming cutting mould (8') fit with the internal measurements of the first (7) and second container (7'), respectively.

11. The device, according to any one of the claims 6 to 10, wherein the first (7) and second container (7') comprise stacking corners.

12. The device, according to any one of the claims 6 to 11, comprising a support (10) for an element selected between the first (8) and second forming cutting mould (8').

13. The device, according to claim 12, wherein the support (10) comprises a frame (11) supported by legs (12), into which an element selected between the first (8) and second forming cutting mould (8') is inserted.

14. The device, according to claim 9, wherein the first and second container comprise a recess (14) for housing the handles (13) of the first (8) and second forming cutting mould (8').
